# EUROPÄISCHE PATENTSCHRIFT

(11) **EP 3 973 205 B1**
(45) Veröffentlichungstag und Bekanntmachung des Hinweises auf die Patenterteilung: **28.02.2024**
(21) Anmeldenummer: 20730196.1
(22) Anmeldetag: 15.05.2020
(51) Int. Cl.: F16D 65/12, B23K 26/34, C22C 38/44

(54) **VERFAHREN ZUR HERSTELLUNG EINES REIBBREMSKÖRPERS FÜR EINE REIBBREMSE**
METHOD FOR PRODUCING A FRICTION BRAKE BODY FOR A FRICTION BRAKE
PROCÉDÉ DE FABRICATION D'UN CORPS DE FREIN À FRICTION POUR UN FREIN À FRICTION

(30) Priorität: 18.05.2019 DE 102019207290
(43) Veröffentlichungstag der Anmeldung: 30.03.2022
(73) Patentinhaber: Robert Bosch GmbH, 70442 Stuttgart (DE)
(72) Erfinder: POTAPENKO, Ilja, 35236 Biedenkopf (DE); SCHNATTERER, Christian, 61440 Oberursel (DE); KIEDROWSKI, Thomas, 74372 Sersheim (DE); WU, Kangjian, 35041 Marburg (DE); LOSKYLL, Simon, 71254 Ditzingen (DE); HELLFEIER, Sebastian, 35232 Dautphetal (DE)
(86) Internationale Anmeldenummer: PCT/EP2020/063593
(87) Internationale Veröffentlichungsnummer: WO 2020/234146

(56) Entgegenhaltungen:
- EP-A1- 3 034 902
- EP-A2- 2 746 613
- DE-A1-102009 008 114
- DE-A1-102017 212 706
- DE-B3- 10 345 000
- US-A1- 2002 179 204
- US-A1- 2006 207 080
- US-A1- 2017 122 392
- US-A1- 2020 072 307

## Beschreibung

Die Erfindung betrifft ein Verfahren zur Herstellung eines Reibbremskörpers für eine Reibbremse eines Kraftfahrzeugs.

### Stand der Technik

Reibbremsen für Kraftfahrzeuge weisen üblicherweise als Reibbremskörper eine Bremsscheibe und zumindest einen Bremsklotz auf, die durch Gegeneinanderpressen eine Bremswirkung erzielen. Dabei ist die Bremsscheibe üblicherweise drehfest mit einem Rad des Kraftfahrzeugs verbunden und der Bremsklotz karosseriefest derart verlagerbar, dass er in Anlagekontakt mit der Bremsscheibe bringbar ist, um durch die Anpressung eine Reibung zwischen Bremsscheibe und Bremsklotz zu erzielen, durch welche die Drehzahl der Bremsscheibe beziehungsweise des mit der Bremsscheibe gekoppelten Rades reduziert wird. Aufgrund des Reibkontakts zwischen Bremsklotz und Bremsscheibe entsteht Abrieb an der Bremsscheibe, der zu Bremsstaub sowie zum Verschleiß der Bremsscheibe führt. Um diesen Verschleiß zu reduzieren, ist es bekannt, den Reibbremskörper zumindest in dem Kontaktbereich zu dem Bremsklotz mit einer Verschleißschutzschicht zu versehen. So ist es beispielsweise bekannt, eine Verschleißschutzschicht auf Basis von Hartmetallen oder Karbiden auf einem aus Grauguss gefertigten Basiskörper des Reibbremskörpers aufzubringen.

Die Offenlegungsschrift EP 3 034 902 A1 offenbart eine Bremsscheibe mit einem aus Grauguss gefertigten Basiskörper und einer auf diesem Basiskörper aufgebrachten Verschleißschutzschicht, sowie ein entsprechendes Verfahren zur Herstellung dieser Bremsscheibe. Dabei ist vorgesehen, dass die Beschichtung Hartstoffe aus keramischen Partikeln aufweist. Die Patentschrift DE 103 45 000 B3 offenbart ein Verfahren zur Herstellung von Bremsteilen, wobei eine Randschicht des Bremsteils mittels Laserenergie aufgeschmolzen wird und anschließend Werkstoffpartikel in die Schmelze eingebracht werden.

### Offenbarung der Erfindung

Ein nach dem erfindungsgemäßen Verfahren mit den Merkmalen des Anspruchs 1 hergestellter Reibbremskörper hat den Vorteil, dass durch einfache und kostengünstige Mittel der Abrieb an dem Reibbremskörper reduziert und die Verschleiß- und Korrosionsbeständigkeit der Reibkontaktoberfläche des Reibbremskörpers erhöht wird. Erfindungsgemäß ist hierzu vorgesehen, dass die Verschleißschutzschicht eine laserlegierte Randschicht des Basiskörpers, der aus Grauguss gefertigt ist, mit zumindest einem Zusatzstoff ist. Die Verschleißschutzschicht ist also eine durch Laserbestrahlung aufgeschmolzene und mit einem Zusatzstoff versehene Randschicht des Grauguss-Basiskörpers. Durch das Aufschmelzen und Hinzufügen des zumindest einen Zusatzstoffs wird das Gefüge der Randschicht vorteilhaft beeinflusst und je nach Wahl des Zusatzstoffs sowie in Abhängigkeit von der Menge des gewählten Zusatzstoffs wird eine höhere Abriebfestigkeit und gegebenenfalls auch eine erhöhte Korrosionsbeständigkeit der Randschicht beziehungsweise der Verschleißschutzschicht des Basiskörpers erreicht.

Gemäß einer bevorzugten Weiterbildung der Erfindung weist der zumindest eine Zusatzstoff Karbide auf, insbesondere aus der Gruppe Chromkarbid, Niobkarbid, Titankarbid, Wolframkarbid, Molybdänkarbid und Vanadiumkarbid. Diese Zusatzstoffe haben den Vorteil, dass sie im Schmelzbad zumindest teilweise anschmelzen und mit der Grauguss-Matrix eine stoffschlüssige Verbindung ausbilden und somit eine kompakte Verschleißschutzschicht auf der Oberfläche beziehungsweise in der Randschicht des Grauguss-Basiskörpers bilden. Falls der zugegebene Zusatzwerkstoff nicht oder nur unwesentlich aufschmilzt und sich die chemische Zusammensetzung der Grauguss-Matrix daher nicht wesentlich verändert, handelt es sich um ein Laserdispergieren. Wird der Zusatzstoff zumindest teilweise aufgeschmolzen oder zumindest im Wesentlichen, sodass eine messbare Veränderung der chemischen Zusammensetzung der Grauguss-Matrix erfolgt, so handelt es sich um Laserlegieren.

Weiterhin ist erfindungsgemäß vorgesehen, dass als Zusatzstoff Chrom, insbesondere elementares Chrom oder Ferrochrom sowie mindestens ein weiteres karbidbildendes Element, insbesondere aus der Gruppe Titan, Niob, Vanadium, Wolfram und Molybdän vorhanden ist. Nach Zugabe der Zusatzstoffe in die Schmelze erfolgt ein zumindest weitestgehendes Aufschmelzen der Zusatzstoffe und eine weitestgehend homogene Verteilung im Schmelzbad. Während der Erstarrung der Schmelze bildet das zusätzlich zu Chrom zulegierte mindestens eine karbidbildende Element mit dem in der Schmelze enthaltenen Kohlenstoff Metallkarbide, welche den Gehalt an freiem Kohlenstoff in der Randschicht reduzieren und die Abriebfestigkeit des Basiskörpers an der Randschicht erhöhen. Besonders bevorzugt wird mehr elementares Chrom zulegiert, als freier Kohlenstoff zur Bildung von Chromkarbid in der Randschicht vorhanden ist, sodass das Chrom nach der Erstarrung in der Eisenmatrix der laserlegierten Randschicht substitutionell gelöst verbleibt und so bei Anwesenheit von Sauerstoff eine Passivschicht an der Oberfläche ausbildet, die einen effektiven Korrosionsschutz bietet.

Besonders bevorzugt erfolgt eine ausreichend schnelle Erstarrung und Abkühlung in der Randschicht beim Laserlegieren beziehungsweise Laserdispergieren, sodass sich ein martensitisches Grundgefüge in der Randschicht unmittelbar nach dem Laserlegieren beziehungsweise Laserdispergieren bildet, das zu einer erhöhten Abriebfestigkeit führt.

Das erfindungsgemäße Verfahren zum Herstellen des Reibbremskörpers für eine Reibbremse mit den Merkmalen des Anspruchs 1 besagt, dass die Verschleißschutzschicht durch Laserlegieren einer Randschicht des Grauguss-Basiskörpers mit zumindest einem Zusatzstoff hergestellt wird. Es ergeben sich dabei die zuvor bereits genannten Vorteile. Erfindungsgemäßwird dabei die Randschicht des Basiskörpers mittels Laserstrahlung zu einer Schmelze aufgeschmolzen und die Schmelze mit dem Zusatzstoff versehen. Der Zusatzstoff wird also in das aufgeschmolzene Material des Basiskörpers hinzugegeben und verteilt sich dort infolge konvektiver Schmelzbaddurchmischung, sodass sich eine homogene Verteilung des Zusatzstoffs in der Randschicht ergibt.

Besonders bevorzugt wird der Zusatzstoff pulverförmig in die Schmelze hinzugegeben, sodass eine vorteilhafte Verteilung des Zusatzstoffs in der Schmelze gewährleistet ist, sodass der Zusatzstoff vorteilhaft metallurgisch mit der Schmelze reagiert. Der pulverförmige Zusatzstoff kann vor der Laserbestrahlung als Pulverbett auf den Basiskörper aufgebracht werden, oder simultan beziehungsweise zeitversetzt zur Laserstrahlbehandlung in die erzeugte Schmelze zugegeben werden.

Gemäß einer bevorzugten Ausführungsform der Erfindung werden als Zusatzstoff Karbide, insbesondere aus der Gruppe Chromkarbid, Niobkarbid, Titankarbid, Wolframkarbid, Molybdänkarbid und Vanadiumkarbid, verwendet. Erfindungsgemäß werden als Zusatzstoff elementare Metalle, nämlich Chrom sowie mindestens ein Element aus der Gruppe Titan, Niob, Vanadium, Wolfram und Molybdän verwendet. Es ergeben sich hier die bereits genannten Vorteile. Erfindungsgemäß wird mehr Chrom der Schmelze hinzugefügt als freie Kohlenstoffe zur Bildung von Chromkarbid in der Schmelze zur Verfügung stehen, insbesondere soll der Gehalt an freien Chromatomen in der laserlegierten Randschicht mindestens 10 Gewichts.-% betragen, um eine ausreichende Korrosionsbeständigkeit des Reibbremskörpers, wie vorstehend bereits erwähnt, zu erreichen.

Gemäß einer bevorzugten Weiterbildung der Erfindung wird die Schmelze zur Ausbildung einer Martensitschicht insbesondere schnell abgekühlt, sodass sich das martensitische Grundgefüge unmittelbar nach dem Laserlegieren beziehungsweise Laserdispergieren einstellt.

Insbesondere für den Fall, dass die Abkühlgeschwindigkeit nicht ausreichend war, so wird nach dem Abkühlen zumindest der Randschicht zumindest ein weiterer Härteprozess, insbesondere Laserhärten, Induktionshärten, oder Flammhärten, durchgeführt, um das martensitische Grundgefüge zu gewährleisten.

Vorzugsweise wird zumindest die Randschicht nach dem Abkühlen zumindest einmal, vorzugsweise mehrmals, angelassen, um die Warmfestigkeit und Temperaturbeständigkeit des Martensits dauerhaft zu gewährleisten. Insbesondere unterstützt das Anlassen die Karbidausscheidung bei der Verwendung von karbidbildenden Elementen aus der Gruppe Wolfram, Molybdän und Vanadium zur Bildung von Metallkarbiden. Dabei wird die Warmfestigkeit und Temperaturbeständigkeit des Martensits bis zu Temperaturen von 600°C durch die Ausscheidung feiner Metallkarbide erzielt, welche die Kohlenstoff-Diffusivität im Eisengitter des Basiskörpers reduziert. Für die Karbidausscheidung wird dazu das Anlassen vorzugsweise bei Temperaturen von 550°C, durchgeführt.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: eine Bremsscheibe in einer vereinfachten Darstellung,
- Figur 2: eine vereinfachte Schnittdarstellung eines vorteilhaften Herstellungsverfahrens und
- Figur 3: ein Flussdiagramm zur Erläuterung des Herstellungsverfahrens.

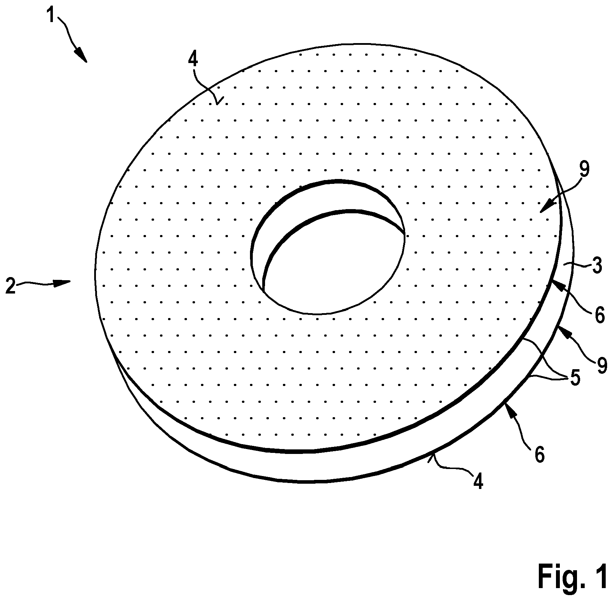

Figur 1 zeigt in einer vereinfachten perspektivischen Darstellung einen Reibbremskörper 1, der als Bremsscheibe 2 für eine hier nicht näher dargestellte Reibbremse eines Kraftfahrzeugs ausgebildet ist. Die Bremsscheibe 2 weist einen aus Grauguss gefertigten Basiskörper 3 auf, der scheibenringförmig ausgebildet ist. Ein optional vorhandener Bremsscheibentopf der Bremsscheibe 2 ist in Figur 1 nicht gezeigt.

Auf seinen beiden Stirnseiten weist der Basiskörper 3 jeweils eine ringförmige Reibkontaktoberfläche 4 auf, die mit einer Verschleißschutzschicht 5 versehen ist. Die Verschleißschutzschicht 5 bildet bei bestimmungsgemäßem Gebrauch den Kontaktpartner eines oder mehrerer Bremsklötze der Reibbremse, welche gegen die Bremsscheibe zur Erzielung einer Reibbremsung gepresst werden können. Durch die während einer Reibbremsung entstehende Reibung zwischen Bremsklotz und Bremsscheibe 2 beziehungsweise Reibbremskörper 1 entsteht Abrieb an dem Reibbremskörper 1, der zum Verschleiß des Reibbremskörpers 1 sowie zu Bremsstaub führt, der in die Umgebung des Kraftfahrzeugs gelangen kann. Durch die Verschleißschutzschicht 5 wird dieser Verschleiß sowie der Bremsstaub reduziert. Darüber hinaus ist eine hohe Korrosionsbeständigkeit der Verschleißschutzschicht vorgesehen.

Die Verschleißschutzschicht 5 ist dazu eine laserlegierte Randschicht 6 des Basiskörpers 3, welche zumindest einen Zusatzstoff 9 aufweist.

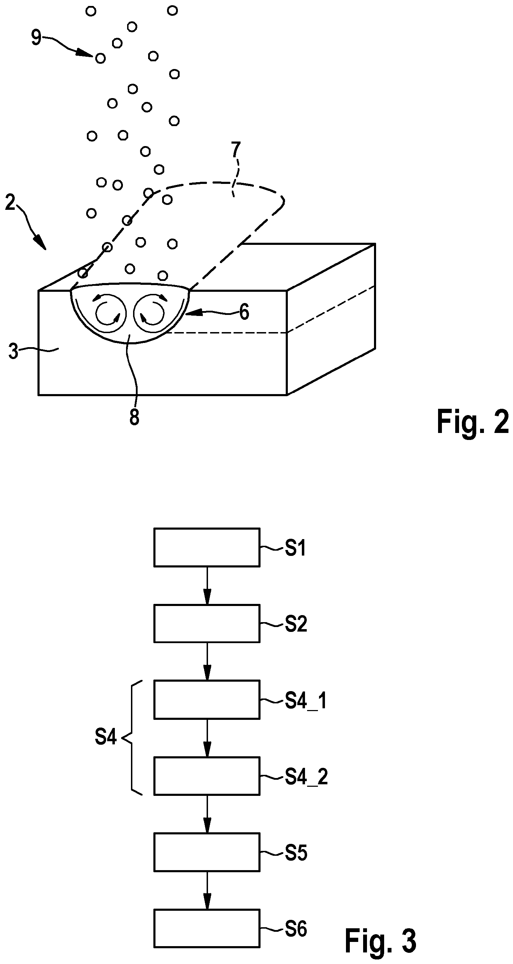

Figur 2 zeigt hierzu in einer vereinfachten Schnittdarstellung ein Herstellungsverfahren der Bremsscheibe. Gezeigt ist der Basiskörper 3 sowie seine Randschicht 6, in welcher die Verschleißschutzschicht 5 durch Laserlegieren hergestellt wird. Für das Laserlegieren wird ein Laserstrahl 7 über den Basiskörper 3 geführt, wobei der Laserstrahl derart energiereich ist, dass die Randschicht 6 des Basiskörpers 3 aufschmilzt, sodass sich eine Schmelze 8 ergibt. In diese Schmelze 8 wird der zumindest eine pulverförmige Zusatzstoff 9 hinzugegeben. Im Vergleich zu Laserauftragschweißen, bei welchem der Zusatzstoff 9 bereits vor Erreichen der Schmelze zumindest teilweise verflüssigt werden kann, ist zum einen die Menge sowie die Zuführrate des Zusatzstoffs 9 bei dem Laserlegieren deutlich niedriger, sodass der zugeführte Zusatzstoff 9 in der Schmelze 8 insbesondere zumindest weitestgehend aufgeschmolzen wird und mit dem aufgeschmolzenen Werkstoff des Basiskörpers 3 zu einer Zone veränderter chemischer Zusammensetzungen in dem oberflächennahen Bereich beziehungsweise der Randschicht 6 des Basiskörpers 3 führt.

Durch die Zulegierung der zuvor bereits erwähnten metallischen oder keramischen Pulver wird die Härte und Korrosionsbeständigkeit der Randschicht 6 erhöht. Gegenüber konventionellen Verschleißschutzschichten, die mittels Laserauftragschweißen oder thermischen Spritzverfahren appliziert werden, besitzt der vorliegende Reibbremskörper 1 einen deutlichen Kostenvorteil durch eine deutlich verringerte Zusatzstoff-Menge. Durch die erhöhte Verschleiß- und Korrosionsbeständigkeit und die daraus resultierende reduzierte Bremsstaubemission ergeben sich außerdem Vorteile in Bezug auf den Umweltschutz.

Figur 3 zeigt dazu in einem vereinfachten Flussdiagramm das Herstellungsverfahren des Reibbremskörpers 1.

In einem ersten Schritt S1 wird ein aus Grauguss gefertigter Basiskörper 3 bereitgestellt. Dabei wird der Basiskörper 3 auf herkömmliche Art und Weise derart gefertigt, dass er ringscheibenförmig ausgebildet ist und auf jeder Stirnseite jeweils eine ringförmige Reibkontaktoberfläche 4 für jeweils einen Bremsklotz der Reibbremse aufweist.

In dem darauffolgenden Schritt S2 wird die Reibkontaktoberfläche 4 mit der Verschleißschutzschicht 5 versehen, indem in einem ersten Schritt S4_1 die Randschicht 6 des Basiskörpers 3 aufgeschmolzen und in einem darauffolgenden Schritt S4_2 der zumindest eine Zusatzstoff 9 in Pulverform in die erzeugte Schmelze hinzugegeben wird. In dem Schritt S4_1 wird die Randschicht 6 insbesondere gerastert durch die Laserstrahlung partiell aufgeschmolzen.

Anschließend wird in einem Schritt S5 die Schmelze abgekühlt und die Verschleißschutzschicht 5 erhalten.

Der oder die Zusatzstoffe, die in die insbesondere überhitzte Schmelze 8 hinzugefügt werden, schmelzen zumindest teilweise an. In Folge der Konvektion erfolgt dabei eine weitestgehende Homogenisierung der Schmelzbadzusammensetzung, wie in Figur 2 durch Pfeile angedeutet.

Optional wird der Reibbremskörper 1, insbesondere die Verschleißschutzschicht 5 in einem abschließenden Schritt S6 mechanisch bearbeitet, insbesondere geschliffen, um beispielsweise eine gewünschte Oberflächenrauigkeit oder Geometrie zu erhalten.

Der Schmelze 8 werden gemäß einem ersten Ausführungsbeispiel Karbide, insbesondere aus der Gruppe Chromkarbid, Niobkarbid, Titankarbid, Wolframkarbid, Molybdänkarbid und Vanadiumkarbid als Zusatzstoffe 9 hinzugegeben. Diese schmelzen in der Schmelze 8 zumindest teilweise an und verbinden sich mit der Grauguss-Matrix stoffschlüssig, somit wird die Verschließschutzschicht 5 gebildet. Falls der zugegebene Zusatzstoff 9 beziehungsweise Zusatzwerkstoff nicht oder nur unwesentlich aufschmilzt, handelt es sich bei dem Verfahren eher um ein Laserdispergieren statt Laserlegieren.

Gemäß einem zweiten Ausführungsbeispiel wird der Schmelze 8 als Zusatzstoff 9 elementares Chrom oder kostengünstigeres Ferrochrom sowie mindestens ein weiteres karbidbildendes Element, insbesondere aus der Gruppe Titan, Niob, Vanadium, Wolfram und Molybdän, zugesetzt. Während der Erstarrung bilden die zulegierten karbidbildenden Elemente mit dem im aufgeschmolzenen Werkstoff des aus Grauguss gefertigten Basiskörpers 3 enthaltenen Kohlenstoff Metallkarbide, wodurch der Gehalt an freiem Kohlenstoff in der laserlegierten Randschicht reduziert wird. Erfindungsgemäß wird mehr elementares Chrom zulegiert als freier Kohlenstoff zur Bildung von Chromkarbid in der Randschicht, sodass das Chrom nach der Erstarrung in der Eisenmatrix der laserlegierten Randschicht substitutionell gelöst verbleibt und so bei Anwesenheit von Sauerstoff eine Passivschicht an der Oberfläche ausbildet, die einen Korrosionsschutz bietet.

In dem Schritt S5 wird die Abkühlung bevorzugt derart schnell durchgeführt, dass sich ein martensitisches Grundgefüge in der Randschicht 6 unmittelbar nach dem Laserlegieren beziehungsweise Laserdispergieren einstellt. Ist die Abkühlgeschwindigkeit nicht ausreichend, so wird bevorzugt ein zusätzlicher Härteprozess, beispielsweise Laserhärten, Induktionshärten oder Flammhärten, im Anschluss an das Laserlegieren und/oder das Abkühlen durchgeführt.

Die hohe Härte der Randschicht 6 basiert dann auf der Bildung von Martensit. Die hohe Warmfestigkeit und Temperaturbeständigkeit des Martensits bis zu Temperaturen von 600°C wird durch Ausscheidung feiner Metallkarbide erzielt, die die Kohlenstoff-Diffusivität im Eisengitter des Basiskörpers 3 reduzieren. Für die Karbidausscheidung wird bevorzugt ein mehrmaliges Anlassen bei Temperaturen von 550°C durchgeführt.

## Patentansprüche

1. Verfahren zum Herstellen eines Reibbremskörpers (1) für eine Reibbremse eines Kraftfahrzeugs, wobei ein Basiskörper (3) des Reibbremskörpers (1) aus Grauguss gefertigt und zumindest bereichsweise mit zumindest einer Verschleißschutzschicht (5) versehen wird, wobei die Verschleißschutzschicht (5) durch Laserlegieren einer Randschicht (6) des Basiskörpers (3) mit zumindest einem Zusatzstoff (9) hergestellt wird, wobei beim Laserlegieren die Randschicht (6) des Basiskörpers (3) zu einer Schmelze (8) aufgeschmolzen und die Schmelze (8) anschließend mit dem zumindest einen Zusatzstoff (9) versehen wird, wobei als Zusatzstoff (9) elementares Chrom oder Ferrochrom sowie mindestens ein weiteres karbidbildendes Element, gewählt aus der Gruppe Titan, Niob, Vanadium, Wolfram und Molybdän, verwendet werden, wobei mehr Chrom der Schmelze (8) zugeführt wird, als freier Kohlenstoff zur Bildung von Chromkarbid in der Schmelze (8) zur Verfügung steht, um die Korrosionsbeständigkeit der Verschleißschutzschicht (5) zu gewährleisten.

2. Verfahren nach Anspruch 1, **dadurch gekennzeichnet, dass** der Zusatzstoff (9) pulverförmig in die Schmelze (8) hinzugegeben wird.

3. Verfahren nach einem der vorhergehenden Ansprüche, **dadurch gekennzeichnet, dass** als Zusatzstoff (9) Karbide, insbesondere gewählt aus der Gruppe Chromkarbid, Niobkarbid, Titankarbid, Wolframkarbid, Molybdänkarbid und Vanadiumkarbid, verwendet werden.

4. Verfahren nach einem der vorhergehenden Ansprüche, **dadurch gekennzeichnet, dass** nach dem Laserlegieren ein martensititsches Grundgefüge in der Verschleißschutzschicht (5) erzeugt wird.

5. Verfahren nach einem der vorhergehenden Ansprüche, **dadurch gekennzeichnet, dass** nach dem Abkühlen ein weiterer Härteprozess, insbesondere Laserhärten, Induktionshärten oder Flammhärten, durchgeführt wird.

6. Verfahren nach einem der vorhergehenden Ansprüche, **dadurch gekennzeichnet, dass** zumindest die Randschicht (6) nach dem Abkühlen zumindest einmal angelassen wird.

## Claims

1. Process for producing a friction brake element (1) for a friction brake of a motor vehicle, where a main element (3) of the friction brake element (1) is made from grey cast iron and is provided at least in regions with at least one antiwear layer (5), where the antiwear layer (5) is produced by laser alloying of a surface layer (6) of the main element (3) with at least one additive (9), where the surface layer (6) of the main element (3) is melted to form a melt (8) and the melt (8) is subsequently provided with the at least one additive (9) during laser alloying, where elemental chromium or ferrochromium and at least one further carbide-forming element, selected from the group consisting of titanium, niobium, vanadium, tungsten and molybdenum, are used as additive (9), where more chromium is added to the melt (8) than the amount of free carbon available for formation of chromium carbide in the melt (8) in order to ensure the corrosion resistance of the antiwear layer (5) .

2. Process according to Claim 1, **characterized in that** the additive (9) is introduced in powder form into the melt (8).

3. Process according to either of the preceding claims, **characterized in that** carbides, in particular selected from the group consisting of chromium carbide, niobium carbide, titanium carbide, tungsten carbide, molybdenum carbide and vanadium carbide, are used as additive (9).

4. Process according to any of the preceding claims, **characterized in that** a martensitic basic microstructure is produced in the antiwear layer (5) after laser alloying.

5. Process according to any of the preceding claims, **characterized in that** a further hardening process, in particular laser hardening, induction hardening or flame hardening, is carried out after cooling.

6. Process according to any of the preceding claims, **characterized in that** at least the surface layer (6) is heat treated at least once after cooling.

## Revendications

1. Procédé de fabrication d'un corps de frein à friction (1) pour un frein à friction d'un véhicule à moteur, dans lequel un corps de base (3) du corps de frein de friction (1) est fabriqué en fonte grise et est au moins par zones pourvu d'au moins une couche de protection contre l'usure (5), la couche de protection contre l'usure (5) étant fabriquée par alliage laser d'une couche marginale (6) d'un corps de base (3) avec au moins un additif (9), la couche marginale (6) du corps de base (3) étant, lors de l'alliage laser, fondue pour donner une masse fondue (8), et la masse fondue étant ensuite pourvue de l'au moins un additif (9), l'additif (9) utilisé étant du chrome élémentaire ou du ferrochrome, ainsi qu'au moins un autre élément carburogène choisi dans le groupe titane, niobium, vanadium, tungstène et molybdène, la quantité de chrome amenée à la masse fondue (8) étant plus importante que celle de carbone libre disponible pour la formation de carbure de chrome dans la masse fondue (8), pour garantir la résistance à la corrosion de la couche de protection contre l'usure (5).

2. Procédé selon la revendication 1, **caractérisé en ce que** l'additif (9) est ajouté à la masse fondue (8) sous forme pulvérulente.

3. Procédé selon l'une des revendications précédentes, **caractérisé en ce qu'**on utilise comme additif (9) des carbures, choisis en particulier dans le groupe carbure de chrome, carbure de niobium, carbure de titane, carbure de tungstène, carbure de molybdène et carbure de vanadium.

4. Procédé selon l'une des revendications précédentes, **caractérisé en ce que**, après l'alliage laser, on produit dans la couche de protection contre l'usure (5) une structure martensitique.

5. Procédé selon l'une des revendications précédentes, **caractérisé en ce que**, après le refroidissement, on procède à une trempe supplémentaire, en particulier une trempe laser, une trempe par induction ou une trempe à la flamme.

6. Procédé selon l'une des revendications précédentes, **caractérisé en ce qu'**au moins la couche marginale (6) est recuite au moins une fois après le refroidissement.
